# EUROPEAN PATENT APPLICATION

(11) **EP 1 047 055 A1**
(43) Date of publication of application: **25.10.2000**
(21) Application number: 99107975.7
(22) Date of filing: 22.04.1999
(51) Int. Cl.: G11B 7/24, G11B 7/26

(54) **Optical storage medium**

(71) Applicant: 3M Innovative Properties Company, St. Paul, Minnesota 55133-3427 (US)
(72) Inventor: Schoeppel, Wolfgang, 41470 Neuss (DE)
(74) Representative: Wilhelm, Stefan

(57) **Abstract**

The invention refers to an optical storage medium from which information can be read out and/or into which information can be recorded with a light beam (6), said optical storage medium comprising one or more base members (1) bearing on the side of the base members (1) on which the light beam (6) is incident, one or more information storage layers (3) and at least one light-transmissive cover film (5) characterized in that said cover films (5) are bonded to each other, to the surface (2) of the base members (1) on which the light beam (6) is incident and/or to one or more information storage layers (3) by means of one or more light-transmissive pressure-sensitive adhesive layers (4).

## Description

### Field of the invention

The present invention refers to an optical storage medium and, in particular, to a Digital Video Recordable disc (DVR) from which information can be read out and/or into which information can be recorded with a light beam, said optical storage medium comprising at least one base member bearing on the side of the base member on which the light beam is incident, one or more readable and/or recordable information storage layers and one or more light-transmissive cover films. The present invention furthermore refers to a method of manufacturing an optical storage medium and, in particular, to a Digital Video Recordable disc (DVR).

### Background of the invention

Optical storage media suitable for recording and reproducing of videos require a storage capacity of 8 Gigabyte (GB) or larger.

This requirement is met by some DVD formats (digital video disc, sometimes also digital versatile disc). DVDs can be divided into DVD-ROMs which are exclusively for reproduction, DVD-RAMS which can also be used for data storage, DVD-Rs which are recordable once ("write once, read many"), DVD-Audios and DVD-Videos. The formats for DVDs have been provisionally defined by an industry consortium (ECMA, Executive Committee of the DVD Consortium) as ECMA/TC 31/97/2, Geneva, Switzerland, January 1997, and presently comprise 4.7 GB, 8.5 GB, 9.4 GB and 17 GB formats.

DVDs generally comprise two disc shaped members, the inner surfaces of which being bonded together with an adhesive layer which must be transparent if the information on one or more of the recording layers is read through the adhesive layer. In the 4.7 GB single layer format only one of the members comprises an information storage layer formed by the inner surface of the substrate which exhibits a sequence of pits with a minimum size of, for example, 0.4 µm. An aluminum layer and, optionally, further layers are deposited on said information storage layer optionally followed by a protective coat. The inner surface of the second substrate which is a dummy substrate is bonded to the inner surface of the first member, i. e., for example, to the Al layer or to the protective coat layer. The 8.5 GB and, in particular, the 9.4 GB and 17 GB formats exhibit more complicated constructions and usually comprise an information storage layer on each substrate. Further details on DVDs and on processes of manufacturing DVDs can be taken, for example, from EP 0,725,396 and the co-pending US patent application S. N. 09/021,225 of the present applicant filed on February 10, 1998.

The 4.7 GB single layer re-writable DVD format is easy to handle comparable, for example, to a conventional CD (compact disc) but offers an insufficient storage capacity for video recording purposes.

A high storage capacity format which has been recently suggested as DVR (Digital Video Recordable disc) overcomes this problem and provides among other constructions a single storage layer format with high capacity which is suitable for digital video recording and storage.

Typical constructions and formats of DVR discs are described, for example, in EP 0,729,141, EP 0,867,873 and in EP 0,874,362.

DVR discs generally comprise a disc-shaped substrate or base member exhibiting on one or both major surfaces an information storage layer comprising a structure of lands and grooves. The DVR discs further comprise a light-transmissive cover film which is applied to the information storage layer on one or both sides of the film.

It is disclosed in EP 0,867,873 that the light-transmissive film is obtained by spin-coating a liquid ultraviolet-curable resin onto the information storage film with subsequent curing. This method is, however, disadvantageous for several reasons. In DVR discs the variation or unevenness of the thickness of the light-transmissive cover film over the radial extension of the disc has to be controlled very carefully in order to minimize the variation in the optical path length for the impinging light. Spin-coating of a liquid UV-curable resin with a low variation of the thickness of the liquid layer requires, for example, that the resin is dosed into the centre of the disc. If the liquid resin is applied off-centre a large variation of the thickness of the resulting spin-coated resin layer is obtained. Since typical DVR discs comprise a central hole removable pieces have to be attached to the disc to temporarily close the central hole during spin coating. Even when applying the liquid resin to the centre of the DVR disc it is difficult to obtain the required layer thickness variation up to the outer edge of the disc. The main problem is that the centrifugal force which is pushing the liquid adhesive from the centre of the disc to its circumference, linearly increases with the radius. Equilibrium is obtained from the action of the centrifugal force on the one side and the frictional force which is due to the viscosity of the liquid adhesive, on the other side. Due to the radius dependence of the centrifugal force it is in principle not possible to obtain a layer of constant thickness. It has been suggested to decrease the thickness variation by slightly increasing the diameter of the disc and obtaining the required size by die-cutting the DVR disc including the disc shaped base member after spin-coating and preferably UV curing. Die-cutting of the disc shaped member after curing is disadvantageous because this establishes an additional process step and may result in the formation of debris and/or introduce stress into the base member which translates into optical distortions of the light-transmissive layers. UV curing may also result in shrinkage and/or distortion of the UV-curable layer and in unfavourable heat generation upon curing.

It is furthermore suggested in EP 0,867,873 to use a polymer film such as, for example, a polycarbonate sheet as light-transmissive cover film or film and adhere such film to the information storage layer by means of a thin, spin-coated layer of a UV curable liquid resin. This method has, however, several disadvantages. Spin-coating of a liquid resin layer with a thickness of as low as, for example, 5 µm, requires a considerable amount of time which renders the process unfavourable from an economic point of view. Also the formation of bubbles was observed in the liquid resin layer which renders the resulting DVR discs optically unacceptable.

It is another important requirement of DVR discs that the light-transmissive cover films are optically highly isotropic so that the change or variation in the refractive index of the light-transmissive layer or layers as seen by the impinging light, is as low as possible. The surfaces of the light-transmissive layers where the light is incident upon, furthermore have to be as smooth as possible in order to avoid scattering losses. Prior art fails to provide criteria how to select a polymeric film as a light-transmissive cover film so that such cover layer provides the required low or very low variation in its optical properties.

It was therefore an object of the present invention to provide novel optical storage media from which information can be read out and/or into which information can be recorded with a light beam, said optical storage media comprising at least one base member bearing on the side of the base on which the light is incident, at least one information storage layer, at least one light-transmissive cover film and, optionally, further light-transmissive layers whereby said optical storage media do not exhibit the shortcomings of prior art optical recording media of such type and which such components or exhibit them to a lower degree only, respectively. More specifically, it was an object of the present invention to provide optical storage media with the above components wherein the thickness variation introduced by the light-transmissive layers into the optical recording medium is low and preferably less than ± 5 µm as measured across an arbitrarily selected cross section of the optical storage medium over its entire extension. It was another object of the present invention to provide optical storage media the light-transmissive cover films of which exhibit a low variation of their optical properties and, in particular, of the refractive index. It was another object of the present invention to provide a method of preparing such novel optical storage media and, in particular, DVR disc type optical storage media.

### Brief description of the invention

It was found that these objects can be met by providing an optical storage medium from which information can be read out and/or on which information can be recorded with a light beam (6), said optical storage medium comprising at least one base member (1) bearing on the side of the base member (1) on which the light beam (6) is incident, one or more information storage layers (3) and one or more light-transmissive cover films (5) characterized in that said light-transmissive cover films (5) are bonded to each other, to the surface (2) of the base member (1) on which the light beam (6) is incident and/or to one or more information storage layers (3) by means of one or more light-transmissive pressure-sensitive adhesive layers (4).

The present invention furthermore refers to a method of preparing an optical recording medium according to the invention comprising
(1) providing at least one base member (1) having a surface (2) on which the light beam (6) is incident, said surface optionally comprising a structure of pits bearing an information storage layer (3),
(2) laminating the laminate of at least one light-transmissive cover film (5) the inner surface of which optionally comprising a structure of pits bearing an information storage layer (3) and a releasable protective film (7), with a laminate comprising at least one pressure-sensitive adhesive layer (4) and a release liner (8) in the order given, between two rollers,
(3) removing said release liner (8) to provide a bondable laminate (12), and
(4) laminating the laminate (12) to the surface (2) of the information storage layer (3) on the surface (2) of the base member (1).

### Brief description of the figures

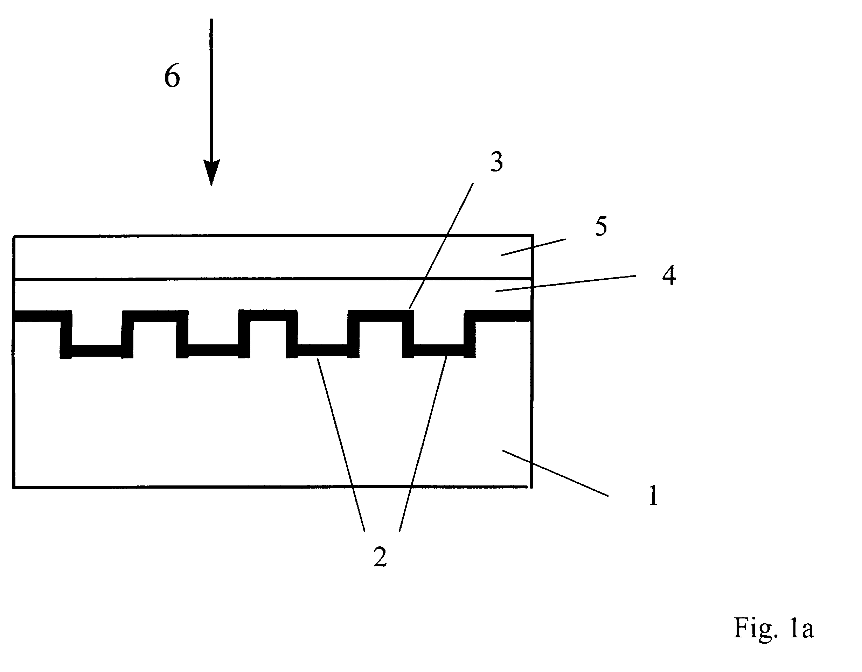

*Fig. 1a* schematically shows a specific embodiment of the optical recording media according to the present invention comprising a base member 1, the surface 2 of which where the light beam 6 is incident upon, comprises a structure of lands and grooves which forms part of an information storage layer 3, said optical storage medium further comprising a light-transmissive cover film 5 bonded to the information storage layer 3 by means of a pressure-sensitive adhesive layer 4.

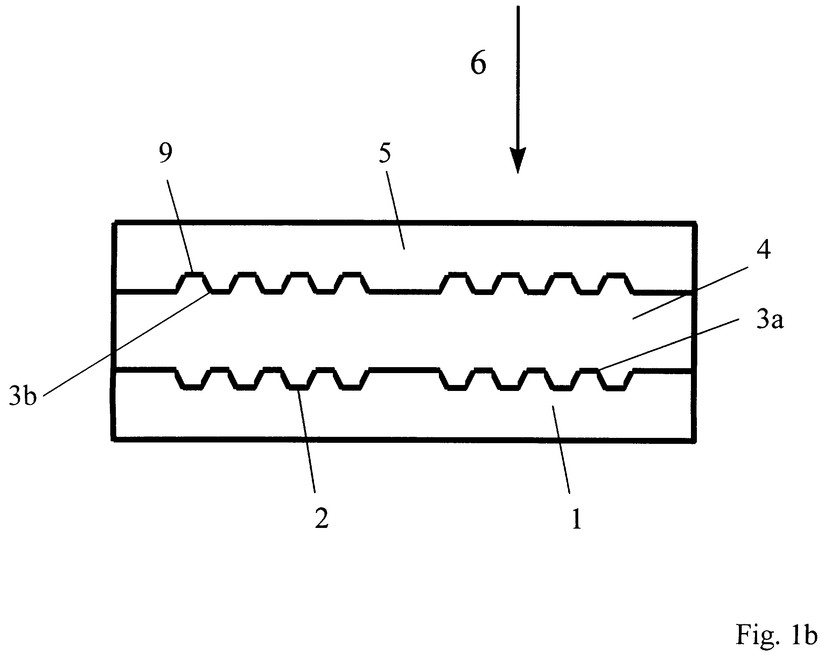

*Fig. 1b* schematically shows another specific embodiment of the optical recording media according to the present invention comprising a base member 1, the surface 2 of which comprises a structure of lands and grooves which forms part of a first information storage layer 3a, said optical storage medium further comprising a light-transmissive cover film 5 onto which the light beam 6 is incident upon, the surface 9 of which comprises a structure of lands and grooves which forms part of a second information storage layer 3b which is bonded to the information storage layer 3a by means of a pressure-sensitive adhesive layer 4.

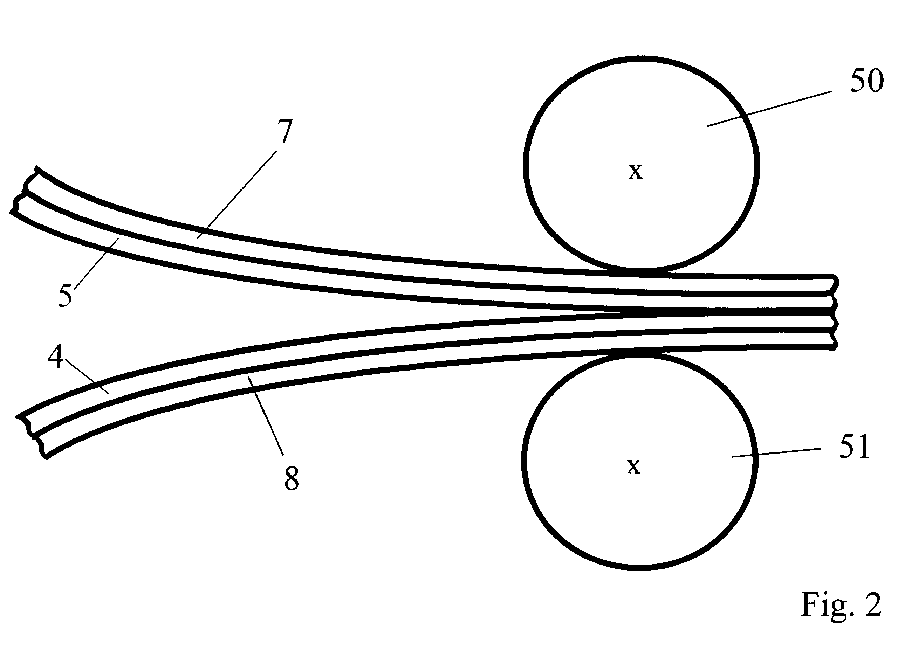

*Fig. 2* schematically shows the lamination of a first laminate comprising a releasable protective film 7 and a light-transmissive cover film 5 to a second laminate comprising a light-transmissive pressure-sensitive adhesive layer 4 and a smooth release liner 8 between two rollers 50,51 so that the exposed surface of the pressure-sensitive adhesive layer 4 is adhered to the exposed surface of the light-transmissive cover film 5.

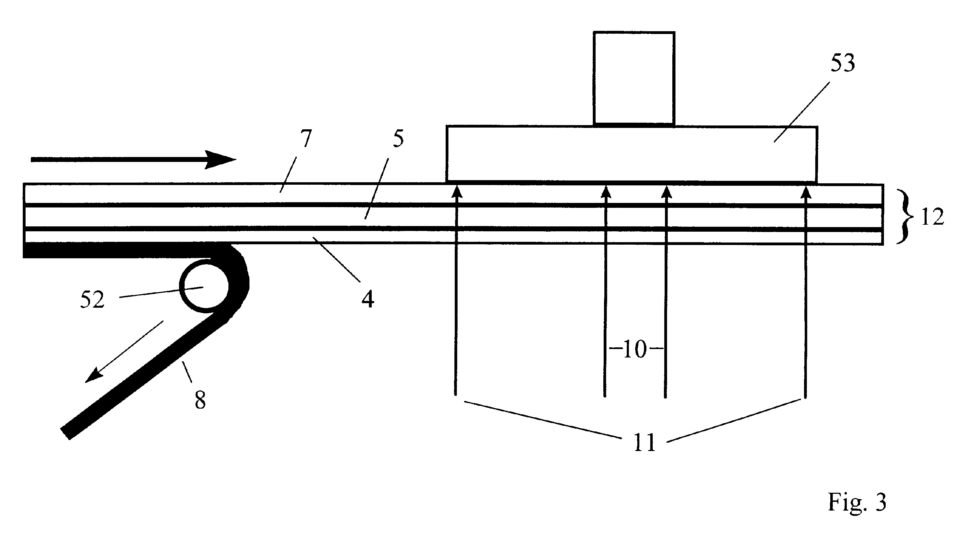

*Fig. 3* schematically shows removal of the release liner 8 from a laminate comprising in the order given a releasable protective film 7, a light-transmissive cover film 5 and a pressure-sensitive adhesive layer 4 by drawing the release liner over roller 52 providing a bondable laminate 12, attachment of such laminate to a vacuum plate holder 53 by means of air suction and subsequent die-cutting to provide a disc-shaped laminate having a center hole 10 and an outer circumference 11, the die-cutting tool not being shown but indicated only by arrows.

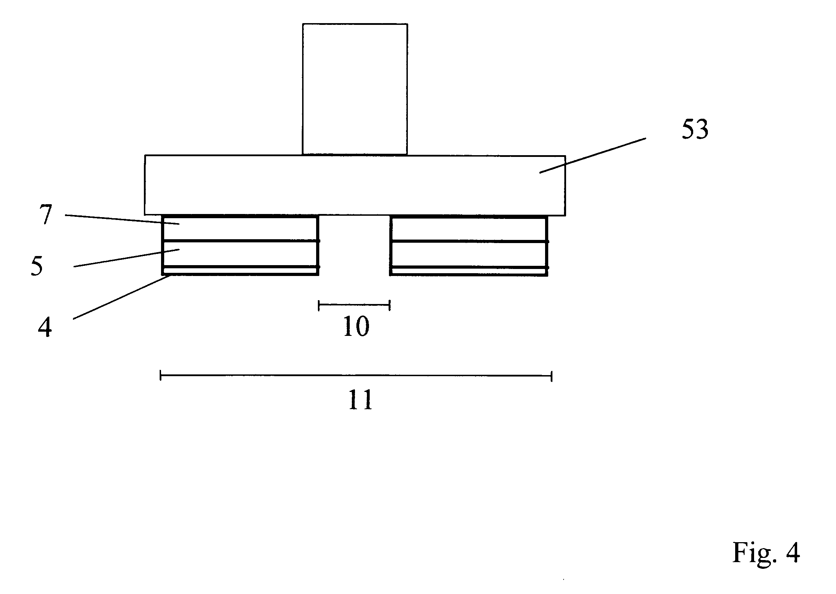

*Fig. 4* schematically shows a disc-shaped laminate comprising in the order given a releasable protective film 7, a light-transmissive cover film 5 and an exposed light-transmissive pressure-sensitive adhesive layer 4, said laminate having a center hole 10 and an outer circumference 11 and being attached to the vacuum plate holder 53 by means of air suction.

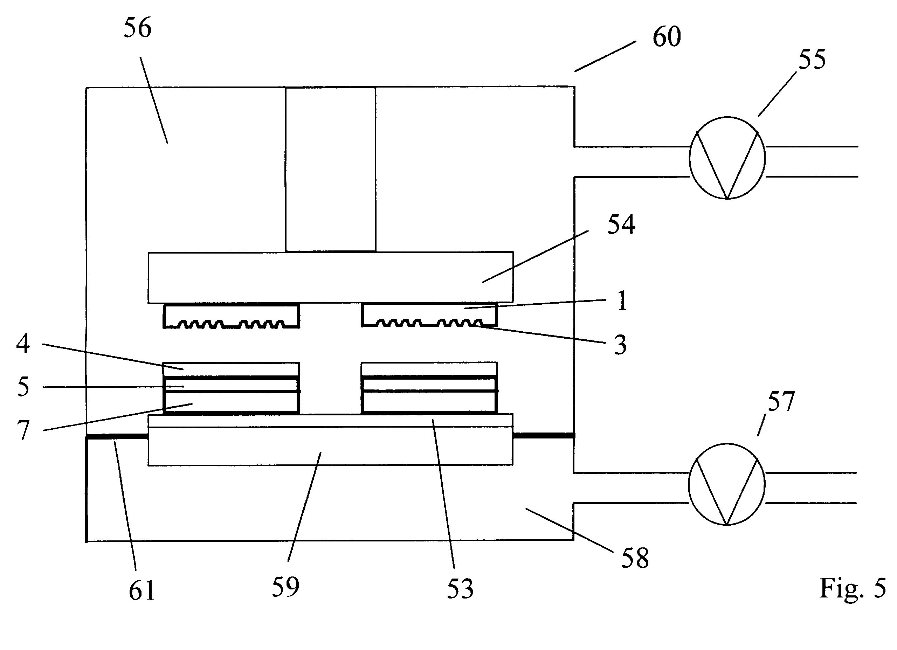

*Fig. 5* schematically shows a vacuum bonding apparatus 60 having an upper vacuum chamber 56 and a bottom pressure chamber 58, the vacuum chamber being pumpable by means of pump 55 and the bottom chamber being pressurizable by means of a pump 57, the upper chamber comprising a top plate 54 and a movable bottom plate 59 separating the upper chamber 56 and the bottom chamber 58 in combination with a flexible seal 61 , the bottom plate 59 comprising vacuum plate holder 53 bearing a die-cut laminate of releasable protective layer 7, light-transmissive cover film 5 and pressure-sensitive adhesive layer 4, and the top plate 54 holding the base member 1 bearing the information storage layer 3.

It should be noted that the figures are schematic only and, in particular, not drawn to scale. In Fig. 1a the thickness of the base member 1 typically is up to one order of magnitude or more larger than the thickness of the light-transmissive cover film 5 whereas the depth of the grooves is typically in the range of 5 to 50 nm and thus negligible in comparison to the thickness of the base member 1.

### Detailed description of the invention

The optical storage media of the present invention comprise at least one base member bearing on the side of the base on which the light is incident, one or more information storage layers which may be readable and/or recordable, at least one light-transmissive pressure-sensitive adhesive layer and at least one light-transmissive cover film.

Fig. 1a shows as an example a schematic representation of a cross-sectional view of a specific embodiment of an optical storage medium according to the present invention comprising a base member 1 exhibiting on its major surface 2 on the side where the light 6 is incident upon, a structure of lands and grooves which forms part of the information storage layer 3. The information storage layer 3 bears the pressure-sensitive adhesive layer 4 the light-transmissive cover film 5 is bonded to.

More complex constructions of optical storage media which are useful in the present invention, are described, for example, in EP 0,867,873 which is incorporated herein by reference. The optical storage media may comprise, for example, two or more information storage layers 3 arranged above each other on one or two, respectively, major surfaces of the substrate. Fig. 1b schematically shows a construction comprising two information storage lagers 3a, 3b applied to the inner surface 2 of the base member and the inner surface 9 of the light-transmissive cover film, respectively.

The base member 1 may be of any shape but preferably is a disc exhibiting a centre hole useful for centering the assembled optical storage medium in a recording or playing station. The disc or annulus shaped substrates preferably have an outer diameter of about 50 to about 360 mm and an inner diameter of the centre hole of about 5 to about 35 mm, and the thickness preferably is between 0.3 and 3.0 mm and especially preferably between 0.8 and 1.5 mm. The substrate preferably comprises polymeric materials such as, for example, acrylic resins, polycarbonates, epoxy resins, cyclic olefin copolymers and polyolefins. Especially preferred are hard plastics such as polymethylmethacrylates, polycarbonates or thermally stable polyester cocarbonates.

The substrate may comprise on one or both, respectively, of its major surfaces a structure comprising concave portions (or grooves) and convex portions (or lands) which are usually collectively referred to as pits. Typical dimensions of pits including a relation between the wavelength of the light, the refractive index of the light-transmissive layer and the depth of a groove in order to minimize optical crosstalk between consecutive lands and grooves are disclosed, for example, in EP 0,874,362 or EP 0,867,873 which are incorporated herein by reference. The track pitch which is the distance between the centreline of adjacent physical tracks as measured in radial direction, typically is 0.64 µm or less.

The structure of pits can be moulded into one or both, respectively, surfaces of the base member or members. This process which is described in detail in EP 0,729,141, p. 4, Ins. 14 - 46, usually comprises a master disc-forming step (as schematically shown in Fig. 4A - 4G of EP '141) and an injection moulding step (as schematically shown in Fig. 5A - 5B of EP '141); EP '141 is incorporated herein by reference. It is also possible, however, that a structure of pits is obtained in the light-transmissive cover film by passing the light-transmissive cover film which is heated to a temperature above its glass transition temperature between two rollers at least one of them exhibiting a patterned structure. This technique is shown schematically in Fig. 10 of EP 0,867,873 where the light-transmissive cover film is passed between a roll and a stamper. The light-transmissive cover film thus obtained can be bonded to the base member or to one or more other light-transmissive cover films optionally bearing a structure of pits, by means of a pressure-sensitive adhesive layer so that optical storage media having a multiplicity of information storage layers can be obtained.

The construction of the information storage layer 3 depends on whether it is to allow for read out and/or recording.

If the optical storing layer is of ROM type, the information storage layer 3 may comprise the structure of pits bearing a reflective film of Al, Au or the like with a thickness of typically between 20 - 60 nm which can be obtained, for example, by sputtering.

Recordable optical storage media may be of phase-change type or magneto-optical type. According to EP 0,867,873 phase-change type information storage layers may be obtained by successively forming on the structure of pits a reflective film such as an Al film, a GeSbTe film and an ZnS-SiO2 film. More complex phase-change type information storage layers are described, for example, in EP 0,874,362. Magneto-optical type information storage layers 3 comprise, for example, the structure of pits bearing a reflective film such as an Al film, a SiN film, a TbFeCo film and a SiN film in this order.

Information storage layers of write-once type can be obtained, for example, by applying a thin reflective film of Al, Au or other metals to the structure of pits which is then coated with a cyanin or phthalocyanine system organic pigment film.

The information storage layers described above are given by way of example only. The optical storage media according to the present invention can comprise other and/or modified constructions of information storage layers.

It was found by the present inventors that optical storage media with a low thickness variation, advantageous optical properties and low jitter values can be obtained by bonding such media with one or more light-transmissive pressure-sensitive adhesive layers. The present invention thus refers to optical storage media which are bonded by one or more pressure-sensitive adhesive layers while avoiding the disadvantageous UV-curable resin layers of prior art.

In the specific embodiment of the optical storage medium schematically shown in Fig.1a the pressure-sensitive adhesive layer 4 bonds the light-transmissive cover film 5 to the information storage layer 3. In more complicated constructions comprising a multiplicity of information storage layers as was described above, pressure-sensitive adhesive layers 4 can also be used to bond two or more light-transmissive cover films 5 optionally comprising an information storage layer 3, to each other.

Another optical storage media of the present invention comprises two or more information storage layers. In the specific embodiment of the optical storage medium schematically shown in Fig. 1b the pressure-sensitive adhesive layer 4 bonds a base member 1 bearing a first information storage layer 3a to a second information storage layer 3b on a light-transmissive cover film 5 onto which the light beam 6 is incident upon.

The pressure-sensitive adhesive is required to be transparent at the wavelength of the incident light beam 6 with which the information is read out from and/or recorded into the optical storage medium. Suitable light sources to generate light beam 6 comprise lasers having, for example, emission lines in the wavelength range of between 400 - 700 nm and preferably of between 600 - 660 nm. The transparency of the pressure-sensitive adhesive at the wavelength of the incident light which can be measured, for example, according to ASTM D 1746, preferably is at least 80 % and more preferably at least 85 %.

The adhesive layer may comprise a transparent backing and/or carrier layer such as, for example, optionally surface-treated, amorphous polymer layers such as polyethylene terephthalate (PET), polycarbonate or polymethylmethacrylate (PMMA) layers carrying on each side an adhesive layer, but preferably it is a transfer film comprising no backing and/or carrier layer. In case of a transfer film, the adhesive layer preferably has an average thickness of between 10 - 100 µm, more preferably, of between 15 - 80 µm, and especially preferably of between 15 - 50 µm, whereas double-sided adhesive tapes comprising a backing and/or carrier layer, may have a thickness of between 50 µm and 150 µm, and more preferably of between 50 µm and 100 µm.

The optical transparency requirements are generally fulfilled by acrylate-based pressure-sensitive adhesives, but silicone-based pressure-sensitive adhesives, rubber resin-based pressure-sensitive adhesives, block copolymer-based adhesives, especially those comprising hydrogenated elastomers, or vinylether polymer-based pressure-sensitive adhesives can also be used. Any of these materials may be compounded with plasticizers and/or tackifiers to tailor their properties. Acrylate-based pressure-sensitive adhesives are preferred.

Acrylate-based pressure-sensitive adhesives which are useful in the present invention can be obtained by polymerization of precursors comprising one or more alkyl acrylates the alkyl groups of which have an average of 4 - 14 atoms. The term average of 4 - 14 atoms means that the average number of carbon (C) atoms of the alkyl acrylate compounds, weighed by their respective percentage by weight with respect to the mass of the alkyl acrylate component, is between 4 - 14 and, in particular, between 4 - 12 C atoms. Useful alkyl acrylates (i.e., acrylic acid alkyl ester monomers) include linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2ethylhexyl acrylate, isononyl acrylate and dodecyl acrylate. The polymerizable precursor of the pressure-sensitive adhesive preferably contains up to 5 and, in particular, 1 - 4 alkyl acrylates. The average number of carbon atoms in the alkyl groups of the alkyl acrylates as defined above, preferably is between 4 - 12 and very particularly between 5 - 10. Blends of different alkyl acrylates may also be used.

The polymerizable precursor of the pressure-sensitive adhesive can furthermore contain alkyl esters of unsaturated aliphatic carboxylic acids other than acrylic acid such as, for example, alkyl maleates and alkyl fumarates (based, respectively, on maleic and fumaric acid). In this regard, dibutyl maleate, dioctyl maleate, dibutyl fumarate and dioctyl fumarate, are preferred. The amount of ester compounds of unsaturated aliphatic carboxylic acids other than acrylic acid preferably is not too high and preferably does not exceed 25 wt. % with respect to the mass of the alkyl acrylate component.

The polymerizable precursor of the pressure-sensitive adhesive can furthermore contain one or more moderately polar and/or strongly polar monomers. Polarity (i.e., hydrogen-bonding ability) is frequently described by the use of terms such as 'strongly', 'moderately', and 'poorly'. References describing these and other solubility terms include 'Solvents', Paint Testing Manual, 3rd ed., G.G. Seward, Ed., American Society for Testing and Materials, Philadelphia, Pennsylvania, and 'A Three-Dimensional Approach to Solubility', Journal of Paint Technology, Vol. 38, No. 496, pp. 269 - 280. Examples for strongly polar monomers are acrylic acid, methacrylic acid and acrylamides while N-vinyl lactams, such as, for example, N-vinyl pyrrolidone and N-vinyl caprolactam, acrylonitrile and dimethyl amino-propyl methacrylate are typical examples of moderately polar monomers. Examples for poorly polar monomers include, for example, iso-bornyl acrylate, vinyl acetate, N-octyl acrylamide, t-butyl acrylate, methyl acrylate, methylmethacrylate or styrene. It was found, however, that when the inner surface of at least one of the members comprises a corrosive layer such as, for example, an Al reflective layer, the percentage of strongly polar monomers is preferably less than about 10 % by weight and, more preferably, less than about 5 % by weight with respect to the mass of the acrylate monomers. The pressure-sensitive adhesive should preferably be essentially free of acrylic acid in order to avoid severe damaging of the inner surface of the members by corrosion.

Acrylate-based pressure-sensitive adhesives which are useful in the present invention are described, for example, in US 4,181,752, US 4,418,120, WO 95/13,331 or in Handbook of Pressure-sensitive Adhesive Technology; D. Satas ed.; Second Edition, New York 1989, pp. 396 - 491. These references are incorporated herein by reference.

The pressure-sensitive adhesive layers useful in the present invention may comprise further components such as, for example, polymer additives, thickening agents, tackifiers, chain transfer agents and other additives provided that they do not reduce the transparency of the pressure-sensitive adhesive or adversely affect the uniformity of the thickness of the pressure-sensitive adhesive layer to an undesirable and/or unacceptable degree. The amount of such additive preferably is not more than 5 wt. % and more preferably between 0 - 2 wt. % with respect to the mass of the pressure-sensitive adhesive.

Pressure-sensitive adhesives which are useful in the present invention preferably exhibit a modulus G' (measured at a temperature of 23° C and a frequency of 1 radian/second) of between 5x10⁵ to 2x10⁶ dyne/cm², more preferably of between 6x10⁵ to 1.5x10⁶ dyne/cm² and especially preferably of between 6.5x10⁵ to 9.5x10⁵ dyne/cm².

The pressure-sensitive adhesive layer can be prepared by coating the pressure-sensitive adhesive layer as an organic or aqueous solution or dispersion onto a release liner with subsequent evaporation of the solvent and optional curing, or as an essentially solvent-free, prepolymerized syrup with subsequent curing. The latter method is described in some detail, for example, in US 4,181,752 whereas coating of a solution or dispersion of the pressure-sensitive adhesive is described, for example, in Handbook of Pressure-sensitive Adhesive Technology; D. Satas ed.; Second Edition, New York 1989, pp. 767 - 868 (incorporated herein by reference). The pressure-sensitive adhesive layer can also be applied by hotmelt coating. The exposed surface of the pressure-sensitive adhesive layer is usually protected with a second release liner prior to or after curing.

It was found by the present inventors that the thickness of the pressure-sensitive adhesive layer has to be carefully controlled in order to allow for the preparation of very uniform optical recording media. It was found that the variation of the thickness of the optical recording medium introduced by the pressure-sensitive adhesive layer, preferably is not more than about ± 3 µm and more preferably not more than about ± 2 µm as measured across an arbitrarily selected cross-section of the optical recording medium over its entire extension using the method of measurement described in the test section below.

A preferred method of preparing very flat, uniform precision caliper pressure-sensitive adhesive layers which fulfill these requirements, are described, for example, in WO 95/29,766 incorporated herein by reference. The method comprises coating of an essentially solvent-free, polymerizable, syrupy precursor of the pressure-sensitive adhesive through a die onto the surface of a substrate as the substrate moves relative to the die. The die includes a channel adapted to receive the precursor of the pressure-sensitive adhesive and an adjustable width slot in communication with said channel through which the precursor is passed. The slot is formed between a substantially straight, sharp edge located on the downstream side of the substrate and a land located on the upstream side of the substrate. The die coating method and the precision coating die are described in more detail in WO 95/29,764 and WO 95/29,765 (incorporated herein by reference). This method can be used, for example, to coat essentially solvent-free, prepolymerized, syrupy precursors of acrylate-based pressure-sensitive adhesives onto a moving belt or a release liner with subsequent curing of the pressure-sensitive adhesive layer. The pressure-sensitive adhesive layer may be directly transferred after curing from the moving belt onto the inner surface of the first member of the optical recording medium, or it may be temporarily stored between release liners prior to application to the inner surface of the first member. When using a moving belt or a release liner with an essentially flat and smooth surface with a surface roughness R_{z} as defined below of less than 2 µm, very homogenous pressure-sensitive adhesive layers with a thickness tolerance of ± 3 µm or less, preferably of about ± 2 µm or less can be obtained. These adhesive layers can be used for the preparation of very uniform optical recording media, and the thickness tolerance introduced by the pressure-sensitive adhesive layer into the optical recording medium is typically ± 3 µm or less.

The refractive index of the pressure-sensitive adhesive layer preferably is adapted to the refractive index of the light-transmissive cover film. The difference in the refractive indices of the light-transmissive cover film and the pressure-sensitive adhesive layer preferably is not more than 0.05 and more preferably less than 0.02. The refractive index of pressure-sensitive adhesives which can be measured, for example, according to ASTM D 542, preferably is at least 1.45 and more preferably at least 1.49. It was found by the present inventors that acrylate-based pressure-sensitive adhesive layers with a refractive index of at least about 1.50 which are useful in the present invention, can be obtained by including a sufficient amount of, for example, phenoxy ethyl acrylate into the polymerizable precursor.

The optical storage media of the present invention comprise one or more light-transmissive cover films which each optionally exhibit on one or both of their major surfaces a structure of pits. The thickness of the light-transmissive cover film preferably is between 10 and 150 µm, more preferably between 20 and 130 µm and especially preferably between 20 and 100 µm. In more complicated constructions of the optical storage medium of the present invention comprising two or more light-transmissive cover films, the thickness of each cover layer preferably is between 10 and 70 µm and more preferably between 20 and 60 µm.

The maximum thickness of the sum of the thicknesses of the light-transmissive cover film or films and the pressure-sensitive adhesive layer or layers of the optical storage media of the present invention can be estimated according to EP 0,867,873 and JP 3-225,650 by using a relationship established in JP 3-225,650 for CDs, between such maximum thickness, the numerical aperture of the optical head device of the optical disc recording and/or reproducing apparatus, the wave length of the light source utilized and the skew margin. When using a laser light source with a wavelength of approximately 0.65 µm, EP 0,867,873 suggests for the sum of the thicknesses of the light-transmissive cover film or films and the pressure-sensitive adhesive layer or layers a value of 288 µm or less whereas for a blue light layer with a wavelength of 0.4 µm a value of 177 µm or less is disclosed.

It was found by the present inventors that in the construction schematically shown in Fig. 1 the thickness of the pressure-sensitive adhesive layer preferably is between 15 and 100 µm and more preferably between 20 and 50 µm and the thickness of the light-transmissive cover film preferably is between 50 and 200 µm, more preferably between 50 and 100 µm and especially preferably between 50 and 85 µm. It was furthermore found by the present inventors that in more complicated constructions comprising two or more light-transmissive cover films and the corresponding number of pressure-sensitive adhesive layers, the sum of the thickness of such light-transmissive cover films and pressure-sensitive adhesive layers preferably is less than 300 µm and more preferably less than 250 µm.

It was found by the present inventors that the light-transmissive cover film or films preferably are highly optically isotropic in order to minimize any distortion of the light beam passing such layer or layers.

The birefringence of the light-transmissive cover film or films preferably each is less than ± 30 nm/d where d is the thickness of the respective light-transmissive cover film, more preferably less than ± 25 nm/d and especially preferably less than ± 15 nm/d.

It was found by the present inventors that light-transmissive cover films with the required low value of birefringence can preferably be obtained by casting
(i) a solution of one or more suitable polymers with subsequent drying, and/or
(ii) an unpolymerized or partially prepolymerized precursor of the respective polymer with subsequent polymerization.

Preparation of the light-transmissive cover film by extrusion of the respective polymer tends to result in the formation of stress and at least a partial orientation of the polymer chains which translates into optical inhomogenities and/or birefringence of the extruded polymer layer. Therefore, extruded polymer layers are less preferred as light-transmissive cover films.

Preparation of the light-transmissive cover film by solvent-casting includes dissolving of the polymer in a solvent, coating of the solution onto a smooth substrate and solidifying the polymer by evaporization of the solvent. Preferred polymers include, for example, polycarbonate, cellulose triacetate and polydicyclopentadiene. Suitable solvents include, for example, dichloromethane, dioxolane, cyclohexanone, tetrahydrofurane and dioxane.

Preparation of the light-transmissive cover film by polymerization-casting includes preparation of a coatable, syrupy precursor which typically comprises the solution of a partially polymerized, curable precursor of the polymer in excess monomer or oligomer. This solution is then cast on a smooth substrate with subsequent polymerization to provide the light-transmissive cover film. This technique allows for the formation of homopolymers or copolymers. Preferred monomers include, for example, (methyl)methacrylate, (methyl)ethylacrylate, or (methyl)propylacrylate, lower amounts of (methyl) (C₄ - C₈ alkyl) acrylates, acrylonitrile or styrene. The degree of prepolymerization is preferably chosen as to provide an easily coatable precursor having a viscosity of, for example, between 0.3 and 200 Pa·s.

The thickness of the cast layer is preferably carefully controlled in order to allow for the preparation of very uniform light-transmissive cover films. It was found that the variation of the thickness of the light-transmissive cover film preferably is not more than ± 3 µm and more preferably not more than ± 2 µm as measured across an arbitrarily selected cross-section of the optical recording medium over its entire extension using the method of measurement described in the test section below.

It was found that the preparation of very flat, uniform precision caliper light-transmissive cover films can preferably be obtained by using the die coating method and the precision coating die described in WO 95/29,764 and WO 95/29,765 cited above. This method can be used, for example, to coat partially prepolymerized, syrupy precursors of the polymer of the light-transmissive cover film or solutions of such polymer, respectively, onto a moving belt or drum or a release liner with subsequent curing of the precursor and/or drying of the solution, respectively. The light-transmissive cover film thus obtained may be directly transferred after curing or drying, respectively, from the moving belt onto the exposed pressure-sensitive adhesive layer. When using a moving belt or a release liner with an essentially flat and smooth surface with a surface roughness R_{z} as defined below of less than 2 µm, very homogenous light-transmissive cover films with a thickness tolerance of about ± 3 µm or less, preferably of about ± 2 µm or less can be obtained. Suitable belts or drums, respectively, with the required smooth surfaces comprise, for example, highly polished stainless steel surfaces. In a preferred method of the present invention the light-transmissive cover film is obtained by casting a solution of a suitable polymer and/or a polymerizable precursor on a moving belt or a release liner having a low surface energy of preferably less than about 35 dynes/cm. It is disclosed in EP 0,380,028 which is incorporated herein by reference that casting of polymer solutions on such surfaces allows for the manufacture of low birefringence polymer films. Suitable low surface energy materials comprise, for example, poly(tetrafluoroethylene), poly(vinylidene fluoride), poly(trifluorochloroethylene), polyethylene and polystyrene with polyethylene, poly(tetrafluoroethylene) and poly(vinylidene fluoride) being especially preferred.

In a preferred method, a multilayer film comprising a light-transmissive cover film and a pressure-sensitive adhesive layer can be obtained by subsequent casting steps. In this method, a release liner with a smooth surface is provided first, and a light-transmissive cover film is applied to such release liner by solvent-casting or polymerization casting, respectively, with subsequent drying or curing, respectively, as was described above. Then, the curable precursor of a pressure-sensitive adhesive is coated on the exposed surface of the light-transmissive cover film with subsequent curing, as is described above. The resulting multilayer film can, for example, be directly laminated onto the information storage layer formed on the pits exhibiting surface of a base member, if desired, with subsequent removal of the release liner to provide the optical storage medium according to Fig. 1a. Alternatively, a release liner may be laminated to the exposed surface of the pressure-sensitive adhesive layer followed by the removal of the release liner from the light-transmissive cover film and, optionally, the lamination of a releasable protective layer to the light-transmissive cover film.

It was found that it is desirable to laminate a releasable protective film to at least one major surface of the light-transmissive cover film in order to protect the surface of the light-transmissive cover film during handling and mounting of the optical recording media.

A wide variety of polymer films optionally bearing a pressure-sensitive adhesive layer can be used as releasable protective film. Useful polymer films which can be used in conjunction with a pressure-sensitive adhesive layer comprise, for example, polyolefin films including homopolymers such as polyethylene or polypropylene films, copolymers such as ethylene/propylene copolymers and mixtures of homopolymers or copolymers such as mixtures of polyethylene and polypropylene, polyethylenterephthalate films or polyurethane films like, for example, extendable elastomeric polyurethanes of the polyetherurethane or polyesterurethane type. It is also possible to use laminates of at least two polymer films the lower exposed film of which being bonded to the light-transmissive cover film 5, exhibiting self-adhering properties. Suitable examples of polymers with self-adhering properties included EVA films (polyethylenevinylacetate) having a high vinyl acetate content of, for example about 5 - 20 wt. % with respect to the mass of the EVA polymer. Such laminates can be used as releasable protective films without a pressure-sensitive adhesive layer.

The pressure-sensitive adhesive if present is preferably selected so that it can be easily removed from the light-transmissive cover film without leaving behind any residual adhesive. It was found by the present inventors that the pressure-sensitive adhesive is preferably selected so that the 90° peel adhesion from a polycarbonate substrate as measured according to PSTC method PSTC-3 is not more than 1 N/2.54 cm, preferably not more than 75 cN/2.54 cm and especially preferably less than 50 cN/2.54 cm. Suitable acrylate based removable adhesives which exhibit a low peel adhesion strength and a high cohesive strength which are useful for the preparation of releasable protective films are described, for example, in US 4,166,152 incorporated herein by reference. Releasable protective films which are useful in the present invention are available as protective tape products from 3M; suitable example is 3M Protective Tape # 2104.

In a preferred method of preparing an optical recording medium according to Fig. 1a, a first laminate comprising a releasable protective film 7 and a light-transmissive cover film 5 is laminated to a second laminate comprising a pressure-sensitive adhesive layer 4 and a smooth release liner 8, between two rolls 50,51 as is schematically shown in Fig. 2. The rolls exhibit a very smooth surface and are arranged to allow for an essentially stress-free and bubble-free lamination of the films.

The resulting laminate is fed into a bonding station schematically shown in Fig. 3 which is operated in a quasi-continuous mode. The release liner 8 is separated from the resulting laminate, for example, by means of a dispensing edge or roll 52 and then attached to a vacuum plate holder 53 by air suction. Using appropriate die-cut equipment (not shown) the die-cut laminate schematically shown in Fig. 4 exhibiting the center hole 10 and the outer circumference 11 corresponding to the dimensions of the disc-shaped base member 1, is obtained. The vacuum plate holder 53 with the attached die-cut laminate is then transferred to a vacuum bonding apparatus 60 schematically shown in Fig. 5. The vacuum bonding apparatus comprises an upper vacuum chamber 56 and a bottom pressure chamber 58 which are separated by the movable bottom plate 59 and the flexible seal 61. The upper chamber 56 can be evacuated by means of pump 55, and the bottom chamber 58 can be evacuated or pressurized, respectively, by means of pump 57. The vacuum plate holder 53 is attached to the bottom plate 59 of the vacuum bonding apparatus 60 with the exposed adhesive layer 4 of the attached die-cut laminate facing up. The base member 1 bearing the information storage layer 3 is attached to the top plate 54 of the vacuum bonding apparatus 60 with the information storage layer 3 facing down. The bottom chamber 58 is evacuated in order to keep the bottom plate 59 in a lower position during the following evacuation of the main chamber 56. The main chamber 56 of the vacuum bonding apparatus 60 is then evacuated via pump 55.The pressure in the bottom chamber 58 is then increased to a certain level via pump 57 thereby pushing the die-cut laminate against the base member 1. Then the bottom plate 59 is driven to the lower position by evacuating the bottom pressure chamber 58. After pressurizing the main chamber 56 of the vacuum bonding apparatus 60 to atmospheric pressure, the optical storage medium according to Fig. 1a of the present invention can be removed from the vacuum bonding apparatus 60. The releasable protective film 7 is removed to give a specific embodiment of an optical storage medium according to the present invention according to Fig. 1a.

In an alternative method of preparing an optical recording medium according to Fig. 1a, the pressure-sensitive adhesive layer 4 is laminated to the information storage layer 3 formed on the pits exhibiting surface 2 of the base member 1. The pressure-sensitive adhesive layer can be supplied, for example, as die-cut having the shape of the base member. The pressure-sensitive adhesive layer is preferably attached near one edge of the base member and then progressively laminated across the surface of the base member, applying a lamination angle of, for example, 45° or less in order to avoid entrapment of air bubbles. The release liner is removed from the pressure-sensitive adhesive layer and the base member bearing the pressure-sensitive adhesive layer can be attached to bottom plate 59 of the vacuum bonding apparatus 60 of Fig. 5. A laminate comprising a releasable protective film and a light-transmissive cover film is applied to the top plate. The optical recording medium is then prepared by pressurizing the bottom chamber 58 thereby pushing the bottom plate 59 to the top plate 54 as was described above.

In another method of preparing an optical recording medium according to Fig. 1a, a laminate comprising a releasable protective film 2, a light-transmissive cover film 5 and an exposed pressure-sensitive adhesive layer 4 is bonded to the exposed surface of the information storage layer 3 of the disc-shaped base member 1 by means of a wheel-bonding device disclosed in co-pending US patent application S. N. 09/065,295 of the present applicant (incorporated herein by reference). The wheel-bonding process which is described in some detail below in Example 3, ensures a bonding almost free of air inclusions as well as a good flatness of the laminated optical storage media.

The method as described above is only exemplary and restricts by no means the scope of the present invention.

### Test methods

### Surface roughness

Surface roughness of pressure-sensitive adhesive layers was measured using a laser profilometer, available from UBM Messtechnik GmbH, Ettlingen, Germany, as Model Number UB-16. The instrument incorporates software which calculated the surface roughness as peak-to-valley height of the surface according to DIN 4768. The average surface roughness R_{z} recorded in micrometers (µm) is defined as the average peak-to-valley height value of several individual measurement areas determined according to DIN 4762.

Each pressure-sensitive adhesive layer had a first and a second major surface, each of which was protected by a release liner prior to evaluation for surface roughness. Each of the two release liners was either the same or different with respect to roughness and/or release coating. Each light-transmissive cover film had a first and a second major surface which were obtained unprotected from the manufacturer.

The surfaces to be evaluated were always sputtered with gold twice before evaluation using a sputter coater, available as Balzers Model SCD 050 from Pfeifer Hochvacuum GmbH in Wiesbaden, Germany. The first sputtering was conducted with the target gold surface parallel to the adhesive layer for 60 sec with a current of 60 milliamps (mA). The second sputtering was conducted with the gold target at an angle of 30 degrees out of parallel for 60 sec with a current of 60 mA.

### Visual inspection of surfaces by scanning electron microscopy and light microscopy, respectively

A scanning electron microscope, available from JEOL, Tokyo, Japan, as model JSM-5400 was used to provide micrographs of surfaces of release liners, pressure-sensitive adhesive layers, releasable protective films and light-transmissive cover films. A light microscope available from Reichert-Jung, Bensheim, Germany, as model Polyvar MET was used to provide microphotographs of surfaces of release liners, releasable protective films, light-transmissive cover films and movable belts used for casting pressure-sensitive adhesive layers and light-transmissive cover films, respectively. Light microscopy photomicrographs were taken using the dark field incident light mode.

### Flatness measurement

The thickness variation of the pressure-sensitive adhesive layer, the light-transmissive cover film and the laminate comprising the pressure-sensitive adhesive layer and the light-transmissive cover film, respectively, was measured using at least one of the following devices:
(i) the DVD tester Biref 126 S DVD commercially available from Dr. Schenk GmbH, Martinsried, Germany,
(ii) the DVD tester ETA-DVD 80 commercially available from STEAG HamaTech AG, Sternenfeld, Germany, and
(iii) the capacitive thickness gauge Profiler 140 E commercially available from Modern Control, Minneapolis, MN, U. S. A.

The measurements of the flatness of the pressure-sensitive adhesive layer with (i) or (ii), respectively, were performed by laminating the pressure-sensitive adhesive layer between two disc-shaped polycarbonate substrates with smooth surfaces having a diameter of 12 cm, a thickness of 0.6 mm and a center hole with a diameter of 15 mm. The inner surface of one of the substrates had an aluminum coating on its inner surface and the inner surface of the other substrate had a semi-transparent coating of silicon carbide (SiC). The thickness was measured with the Biref 126 S DVD tester (i) or the ETA-DVD tester (ii), respectively, point-by-point. The Biref tester had a maximum resolution in radial direction of 1 mm and in tangential direction of 2 mm. The thickness resolution is within the range of 1 µm. The ETA-DVD tester had a maximum resolution in radial direction of 0.1 mm and in tangential direction of 0.1 mm, the thickness resolution is 0.1 µm within the range of 25 - 120 µm.

The flatness of the light-transmissive cover film was measured using capacitive thickness gauge Profiler 140 E (iii). The thickness resolution was 0.01 µm and the test speed was 1 cm/sec.

The flatness of the sum of the thickness of the light-transmissive cover film and the pressure-sensitive adhesive layer in the assembled optical storage medium was performed using the ETA-DVD tester (ii). A compact disc-shaped base member bearing a reflective aluminum layer was laminated with a pressure-sensitive adhesive layer 4 and a light-transmissive cover film 5 in the vacuum bonding apparatus 60. The bonded disc comprising a 0.2 mm base member, a reflective aluminum layer, a pressure-sensitive adhesive layer, a light-transmissive cover film and a releasable protective film was mounted on the ETA-DVD tester after removal of the releasable protective film. The ETA-DVD tester consists of a turntable onto which the disc is mounted, a laser/sensor system and the measuring computer unit.

### Optical retardation

The optical retardation of the light-transmissive cover film and the pressure-sensitive adhesive layer was measured in the assembled optical storage medium using the Biref 126 S DVD tester.

### 180° peel adhesion of releasable protective films from light-transmissive cover films

A sample of the respective releasable protective film was laminated to the Pokalon OG 46 GL polycarbonate light-transmissive cover film with a thickness of 75 µm with a rubber roller of 1 kg by applying hand pressure. The laminates were stored for 2 hours and then oven aged for 1 hour at 60°C. 1 inch (2.54 cm) wide test specimens were cut and the exposed polycarbonate surface of the laminate was bonded onto an aluminum substrate with a double-coated pressure-sensitive adhesive tape commercially available as Tape # 444 from Minnesota Mining and Manufacturing Company ("3M"), St. Paul, MN, USA. One end of the exposed surface of the respective releasable protective film which is facing up was lifted off and wrapped with a piece of a masking pressure-sensitive adhesive tape which is available from 3M Company. The set-up was stored for 24 hours. Then the aluminum plate was fixed in the lower clamp and the masking tape was fixed in the upper clamp of a standard tensile test equipment. A 100 N force gauge was used. The peel test speed was 150 mm/min.

### Examples

### Example 1

A solvent cast polycarbonate film with a thickness of 75 µm was provided as a polycarbonate light-transmissive cover film available under the trade designation "Pokalon OG46 GL" from Lonza, Weil/Rhein, Switzerland. The flatness of the film was qualitatively assessed by means of light microscopy, using a magnification of 600x Photomicrographs which were taken from the two major surfaces of the Pokalon OG46 GL film, show very smooth surfaces which are basically free of flaws. The surface roughness R_{z} was approximately < 0.1 µm. The thickness variation as measured with the 140 E Profiler was 0.32 µm over an arbitrarily selected distance of 25 mm in cross direction and 0.05 µm over an arbitrarily selected distance of 25 mm in machine direction.

A suitable piece of the light-transmissive protective film (approximately 60 cm x 30 cm) was placed on a smooth PVC surface. A pressure-sensitive adhesive layer (no carrier layer but pure adhesive layer) was then provided as optically clear laminating pressure-sensitive adhesive transfer film # 8142 which is available from 3M Company. The pressure-sensitive adhesive layer was protected by two essentially smooth polyester release liners (surface roughness R_{z} of the release liner less than 2 µm). The thickness of the # 8142 pressure-sensitive adhesive layer was 50 µm with a thickness variation of ± 2 µm as measured with the Biref 126 S DVD tester. The # 8142 pressure-sensitive adhesive layer further had a refractive index of 1.475, a surface roughness of approximately 0.5 µm on each surface and a cleanliness of such as to meet class 1000 clean-room requirements.

A suitable piece of the # 8142 pressure-sensitive adhesive layer which was greater than the size of the light-transmissive cover film was then provided with two adhesive tape tabs adhered to the release liner and extending past the perimeter of the linered pressure-sensitive adhesive sheet to aid in removal of the release liners without contaminating the pressure-sensitive adhesive layer. After removal of the low release liner, the # 8142 pressure-sensitive adhesive layer was laminated with its exposed surface onto the Pokalon OG46 GL polycarbonate film. The adhesive face was placed near one edge of the polycarbonate film and pressed onto the exposed surface of the polycarbonate film from one edge to the other using a rubber lamination roller with a mass of 1 kg with hand pressure, in such a manner that the exposed adhesive surface on the release liner was fed under the lamination roller while being bent backwards over the roller so that the release liner made an angle of approximately 45° or less with itself. The exposed surface of the flexible pressure-sensitive adhesive layer on the release liner was thus applied to the exposed surface of the polycarbonate film in such a manner as to prevent the entrapment of air bubbles at the interface between these surfaces. The resulting laminate was then flipped so that the exposed release liner surface was placed on the stainless steel substrate and a surface of the polycarbonate film was exposed.

Then an adhesive tape having serial number 2104 C, comprising a backing and bearing a low-release pressure-sensitive adhesive layer, available from 3M Company, was provided as releasable protective film. A suitable piece of the releasable protective film which was greater than the size of the polycarbonate film was laminated with its pressure-sensitive adhesive layer onto the exposed polycarbonate film using a rubber lamination roller with a mass of 1 kg with hand pressure.

Then a disc-shaped base member suitable for preparing a DVR disc with a recording capacity of 8 GB, comprising a disc-shaped polycarbonate substrate having an outer diameter of 120 mm, a thickness of 1.2 mm and a central hole with a diameter of 15 mm, was prepared by forming a master disc and subsequent injection moulding following the procedure described in EP 0,729,141, col. 6, Ins. 14 - 46. The disc-shaped base member had a first flat major surface and a second major surface opposite to the first one which bore pits created by injection moulding. An approximately 50 nm thick aluminum layer was applied on the structure of pits on the second major surface by means of sputtering as is disclosed in EP 0,729,141, col. 6, Ins. 47 - 55.

Then a polyamide plate coated with a silicon-urea release coating exhibiting an indent suitable for fixing the disc-shaped DVR base member during subsequent lamination, was provided. After removal of the polyester release liner from the laminate comprising the releasable protective layer, the light-transmissive cover film, the pressure-sensitive adhesive layer and the polyester release liner and placing of the DVR base member into the indent with the information storage layer facing up, the exposed pressure-sensitive adhesive layer of the laminate is placed near one edge of the DVR base member and pressed onto the exposed information storage layer progressively from one edge to the other using a rubber lamination roller with a mass of 1 kg with hand pressure under a lamination angle of approximately 45° or less as was described above.

The resulting DVR disc is then flipped so that the releasable protective film is placed on the polyamide substrate, and the inner and outer edges of the laminate adhered to the information storage layer of the base member are cut with a scalpel along the outer and inner periphery of the base member.

The resulting DVR disc was flipped and an adhesive tape tab was attached to the exposed surface of the releasable protective layer to aid in the removal of the releasable protective layer.

The combination of the light-transmissive cover film and the pressure-sensitive adhesive layer in the DVR disc obtained was tested for flatness using the ETA-DVD 80 DVD tester as is described above. The above two layers had an average thickness of 102.8 µm with a minimum thickness value of 102.2 µm, a maximum thickness value of 103.4 µm and a standard deviation of 0.3 µm.

The DVR disc obtained was furthermore tested for flatness measuring the radial and tangential tilt of the laser beam of the Biref 126 S DVD tester when it is reflected from the information storage layer of the disc. The optical retardation of the DVR disc was ± 25 nm.

### Comparative example 1

A 50 µm thick cellulose triacetate film to be used as a light-transmissive cover film was obtained as Triphan P91GL from Lonza, Weil/Rhein, Switzerland. Microscopical analysis of the film with Reichert-Jung light microscope Polyvar MET showed that the film exhibited small particles extending over the surface of the film. The small particles are agglomerates of an antiblocking agent required for production and handling of the Triphan P91GL film. Since the small particles would have acted as scattering centers, the Triphan P91GL film was not used for the preparation of DVR discs.

### Example 2

Example 1 was repeated with the difference that optically clear laminating pressure-sensitive adhesive # 8141 which is available from 3M Company, was used as pressure-sensitive adhesive layer. The # 8141 pressure-sensitive adhesive layer was protected by two essentially smooth polyester release liners (surface roughness R_{z} of the release liners less than 2 µm) and had a thickness of 25 µm ± 1.5 µm as measured with the Biref 126 S DVD tester.

The example was repeated three times and the results of the measurements are summarized in table 1.

**Table 1**

| Run | Minimum thickness [µm] | Maximum thickness [µm] | Average thickness [µm] | Standard deviation of thickness [µm] |
|---|---|---|---|---|
| 1 | 101.6 | 103.2 | - | - |
| 2 | 101.3 | 102.4 | - | - |
| 3 | 102.2 | 103.4 | 102.8 | 0.3 |

### Example 3

Example 2 was repeated with the difference that bonding of the laminate comprising the releasable protective film, the light-transmissive cover film and the exposed pressure-sensitive adhesive layer to the exposed surface of the information storage layer of the disc-shaped base member was performed by means of a wheel-bonding device which is disclosed in co-pending US patent application S. N. 09/065,295 of the present applicant. The disc-shaped base member bearing the information storage layer as well as the laminate comprising the releasable protective film, the light-transmissive cover film and the exposed pressure-sensitive adhesive layer are mounted on two slightly curved surfaces.

The curvature of these surfaces corresponds to the outer curvature of rolls with a diameter of at least 1.2 m. The information storage layer of the disc-shaped base member and the pressure-sensitive adhesive layer of the laminate are now put in contact by counter-rotation of the curved surfaces and by means of a certain pressure. The process is done in a way which ensures that the still unbonded area of the disc-shaped base member bearing the information storage layer as well as the unbonded area of the laminate comprising the releasable protective film, the light-transmissive cover film and the exposed pressure-sensitive adhesive layer, respectively, maintain contact to the curved surfaces, whereas the already bonded area releases from the respective curved surface.

The radial and tangential, respectively, tilt of a vertically incident laser beam was measured with the Biref 126 S DVD tester for the disc-shaped base member comprising the information storage layer prior to laminating the above laminate of pressure-sensitive adhesive layer/Pokalon OG46GL polycarbonate film/# 8141 pressure-sensitive adhesive layer and for the resulting optical recording medium disc after such lamination with the wheel-bonding device. The example was repeated fourteen times and the results are summarized in table 2.

It is evident from table 2 that the average value of the span of the radial tilt amounts to 0.50 ± 0.10° prior to lamination and that this value is only slightly increased to 0.58 ± 0,15° after lamination. Likewise, the average value of the span of the tangential tilt is 0.35 ± 0.06° prior to lamination, and the corresponding value after lamination is 0.43 ± 0.09°. This shows that the method of wheel-bonding disclosed in US patent application 09/065,295 results in a small and acceptable deterioration of the flatness of the optical recording medium only.

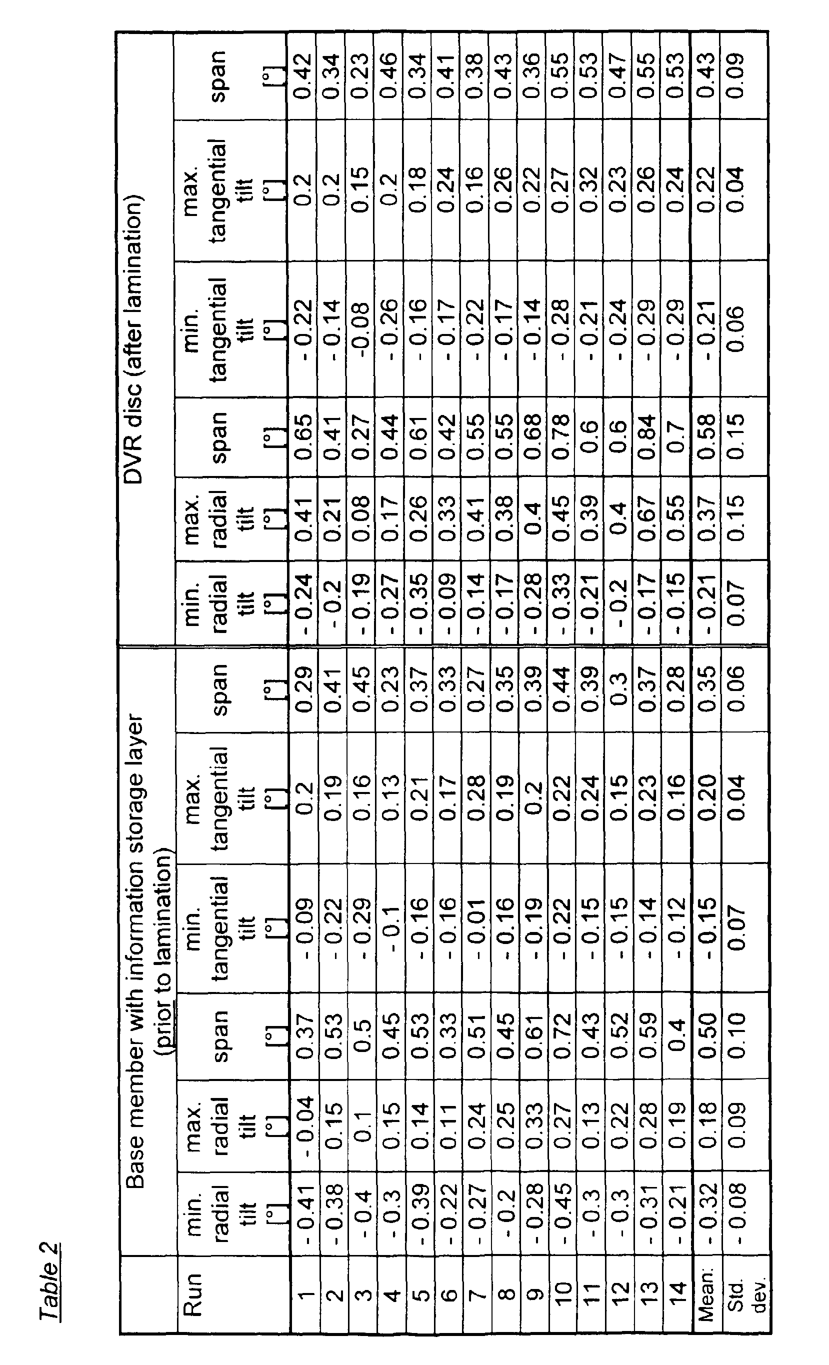

### Example 4

The following releasable protective films were provided:
a) A two-layer releasable protective film comprising a first layer of a polymer mixture of 50 wt. % of polypropylene PPC 8750 (commercially available from Fina Deutschland GmbH, Bleichstr. 2 - 4, D-60313 Frankfurt, Germany), and 50 wt. % of low density polyethylene LD 0304 (commercially available from ELF Atochem Deutschland GmbH, Tersteegenstr. 28, D-40401 Duesseldorf, Germany) with a thickness of 50 µm and a second layer of EVA copolymer Evatane 2803 (commercially available from ELF Atochem Deutschland GmbH, with a thickness of 26 µm, was obtained by coextrusion as is described in some detail in example 1. The releasable protective film exhibited a matte surface of the PPC 8750/LD 0304 polymer layer and a smooth self-adhering surface of the Evatane.
b) A two-layer releasable protective film comprising a first layer of low density polyethylene LD 0304 with a thickness of 50 µm and a second layer of EVA copolymer Evatane 2803 was obtained by coextrusion following the procedure applied above in a). The releasable protective film exhibited a smooth surface of the LD 0304 layer and a smooth self-adhering surface of the Evatane 2803 layer.
c) A releasable protective laminate film comprising two polymer layers with one of them exhibiting self-adhering properties available under the trade designation "GH-X 173" was obtained from Bischof & Klein, Lengerich, Germany. The film had a thickness of 50 µm and was smooth on both major surfaces.
d) A releasable protective film comprising a backing and bearing a low-release pressure-sensitive adhesive layer, was obtained from 3M Company as adhesive tape # 2104 C. The backing exhibited a smooth exposed surface.
e) A releasable protective film comprising a backing bearing a low-release pressure-sensitive adhesive, was obtained from Nitto Deutschland GmbH, Am Sandbach 32, D-40878 Ratingen, Germany, as adhesive tape 5057 A5. The backing exhibited a smooth exposed surface.
The 180° peel adhesion of each of the releasable protective films from the Pokalon OG46 GL polycarbonate film was measured as is described above. The results of the measurements are summarized in table 3.

**Table 3**

| **180° peel force [cN/2.54 cm]** | | | | | | |
|---|---|---|---|---|---|---|
| | Peeling in direction of lamination of releasable protective film to polycarbonate film | | | Peeling perpendicular to direction of lamination of releasable protective film to polycarbonate film | | |
| Releasable protective film | No. of measurements | Average value | Stand. dev. | No. of measurements | Average value | Stand. dev. |
| a | 10 | 9.01 | 2.7 | 6 | 6.6 | 0.6 |
| b | 4 | 12.51 | 7.6 | - | - | - |
| c | 4 | 8.0 | 6.0 | 6 | 4.9 | 0.7 |
| d | 4 | 46.4 | 10.4 | - | - | - |
| e | 4. | 102.9 | 16.7 | - | - | - |

## Claims

1. Optical storage medium from which information can be read out and/or into which information can be recorded with a light beam (6), said optical storage medium comprising one or more base members (1) bearing on the side of the base members (1) on which the light beam (6) is incident, one or more information storage layers (3) and at least one light-transmissive cover film (5) characterized in that said cover films (5) are bonded to each other, to the surface (2) of the base members (1) on which the light beam (6) is incident and/or to one or more information storage layers (3) by means of one or more light-transmissive pressure-sensitive adhesive layers (4).

2. Optical storage medium according to claim 1, comprising one base member (1) the surface (2) of which bearing a structure of pits on which an information storage layer (3) is formed.

3. Optical storage medium according to claim 2 comprising one light-transmissive cover film (5) bonded to the information storage layer (3) on the surface (2) of the base member (1) by means of a light-transmissive pressure-sensitive adhesive layer (4).

4. Optical storage medium according to one of claims 1 - 3 wherein the light-transmissive cover film or films (5) are formed by casting of a polymer dissolved in a solvent and/or a polymerizable precursor of a polymer with subsequent drying and/or curing.

5. Optical storage medium according to claim 4 wherein the polymer dissolved in a solvent is selected from a group of polymers consisting of polycarbonate, cellulose triacetate and polydicyclopentadiene.

6. Optical storage medium according to any of claims 4 or 5 wherein the thickness of the light-transmissive cover film or films (5) is from 10 µm to 200 µm.

7. Optical storage medium according to any of claims 1 - 6 wherein the thickness of the light-transmissive pressure-sensitive adhesive layer or layers (4) is from 10 µm to 100 µm.

8. Optical storage medium according to any of claims 1 - 7 wherein the variation of the thickness of each light-transmissive cover film (5) and/or the variation of the thickness of the optical recording medium introduced by each light-transmissive cover film (5) as measured across an arbitrarily selected cross-section of the optical recording medium over its entire extension is not more that about ± 3 µm.

9. Optical storage medium according to any of claims 1 - 8 wherein the variation of the thickness of each light-transmissive pressure-sensitive adhesive layer (4) and/or the variation of the thickness of the optical recording medium introduced by each light-transmissive pressure-sensitive adhesive layer (4) as measured across an arbitrarily selected cross-section of the optical recording medium over its entire extension is not more than about ± 3 µm.

10. Optical storage medium according to any of claims 1 - 9 comprising one light-transmissive cover film (5) and one light-transmissive pressure-sensitive adhesive layer (4) wherein the sum of the variation of the thickness of the light-transmissive cover film (5) or the variation of the thickness of the optical medium introduced by the light-transmissive cover film (5), respectively, and the variation of the thickness of the light-transmissive pressure-sensitive adhesive layer (4) or the variation of the thickness of the optical recording medium introduced by the pressure-sensitive adhesive layer (4), respectively, is not more than ± 5 µm, whereby such sum is measured across an arbitrarily selected cross-section of the optical recording medium over its entire extension.

11. Method of preparing an optical recording medium according to any of claims 1 - 10 comprising
(1) providing at least one base member (1) having a surface (2) on which the light beam (6) is incident, said surface optionally comprising a structure of pits bearing an information storage layer (3),
(2) laminating the laminate of at least one light-transmissive cover film (5) the inner surface of which optionally comprising a structure of pits bearing an information storage layer (3), and a releasable protective film (7) with a laminate comprising at least one pressure-sensitive adhesive layer (4) and a release liner (8) in the order given, between two rollers,
(3) removing said release liner (8) to provide a bondable laminate (12), and
(4) laminating the laminate (12) to the surface (2) of the information storage layer (3) on the surface (2) of the base member (1).
